# EUROPÄISCHE PATENTSCHRIFT

(11) **EP 2 264 947 B1**
(45) Veröffentlichungstag und Bekanntmachung des Hinweises auf die Patenterteilung: **11.02.2015**
(21) Anmeldenummer: 10450101.0
(22) Anmeldetag: 14.06.2010
(51) Int. Cl.: H04L 12/28, H04L 29/12, H05B 37/02

(54) **Steuergerät zur Erkennung der Zuordnung von Adressen eines Steuerbusses zu elektrischen Geräten an dem Steuerbus**
Control device for recognising the allocation of addresses of a control bus for electrical devices on the control bus
Appareil de commande destiné à la reconnaissance de l'attribution d'adresses d'un bus de commande à des appareils électriques sur le bus de commande

(30) Priorität: 17.06.2009 AT 9262009
(43) Veröffentlichungstag der Anmeldung: 22.12.2010
(73) Patentinhaber: Lunatone Industrielle Elektronik GmbH, 1220 Wien (AT)
(72) Erfinder: Mair, Alexander, 2285 Breitstetten (AT)
(74) Vertreter: Patentanwaltskanzlei Matschnig & Forsthuber OG

(56) Entgegenhaltungen:
- WO-A1-2009/040298

## Beschreibung

Die Erfindung betrifft ein Steuergerät zur Erkennung der Zuordnung von Adressen eines Steuerbusses zu elektronischen Geräten, welche an dem Steuerbus angeschlossen sind, wobei jedem Gerät eine eindeutige Adresse zugeordnet ist, über welche Adresse das Gerät über den Steuerbus ansteuerbar ist, und wobei das Steuergerät zur Ansteuerung der Geräte an den Steuerbus anschließbar ist.

In der Gebäudetechnik, sowohl im Einfamilienhausbereich als auch in Büro- und Firmengebäuden gewinnen Steuerbus-Anlagen zunehmend an Bedeutung bzw. werden schon häufig installiert. An einen solchen Steuerbus können unterschiedlichste elektronische Geräte angeschlossen werden, welche dann über diesen Steuerbus gesteuert werden können.

Die an dem Steuerbus angeschlossenen Geräte werden jeweils über eindeutige Adressen an dem Steuerbus angesteuert, d.h. jedem Gerät ist genau eine eindeutige Adresse zugeordnet, diese Geräte können dann über entsprechend zugeordnete Bedienelemente wie Taster, Schalter etc. gesteuert werden. Bei der Installation und Inbetriebnahme der Busanlage ist es dazu in einem ersten Schritt notwendig zu identifizieren, welchem Gerät welche Adresse zugeordnet ist, damit dieses Gerät korrekt angesteuert werden kann.

Dazu wird vorerst mit einem an den Bus angeschlossenen Steuergerät eine Liste aller verfügbaren Adressen generiert, welche dann anschließend den am Bus installierten Geräten zugeordnet werden müssen. Beispielsweise handelt es sich bei den Geräten um Beleuchtungskomponenten.

Nachdem nun mit - in diesem konkreten Fall - einem Lichtsteuergerät eine Liste aller verfügbaren Adressen generiert ist, sendet das Lichtsteuergerät einen Einschaltbefehl an eine bestimmte Adresse. Jene Beleuchtungskomponente, welche dieser Adresse zugeordnet ist, beginnt entsprechend zu leuchten und muss nun von einem Benutzer in dem Gebäude gefunden werden. Sobald die Komponente aufgefunden wurde, kann die Komponente der Adresse zugeordnet und in einem entsprechenden Geräteplan eingetragen werden. Mit dem Lichtsteuergerät wird anschließend die nächste Beleuchtungskomponente eingeschaltet und der Benutzer begibt sich wieder auf die Suche .....

Wie leicht zu erkennen ist, führt diese Vorgangsweise zwar zum Ziel, ist aber - bedingt durch das notwendige Suchen der eingeschalteten Beleuchtungskomponente - sehr zeitaufwändig, wobei insbesondere mit steigender Anzahl der Geräte und zunehmender Größe des Gebäudes der Zeitaufwand erheblich steigt.

Es ist eine Aufgabe der Erfindung, die Zuordnung der Adressen zu an einem Steuerbus angeschlossene Geräte wesentlich zu vereinfachen bzw. den dafür notwendigen Zeitaufwand deutlich zu reduzieren.

Diese Aufgabe wird mit einer eingangs genannten Vorrichtung gelöst, welche sich erfindungsgemäß dadurch auszeichnet, dass das Steuergerät aus einem Basisgerät zur Verbindung mit dem Steuerbus besteht, sowie weiters aus einem Mobilgerät, und wobei das Basisgerät und das Mobilgerät zur Kommunikation miteinander eingerichtet sind, und wobei das Basisgerät und das Mobilgerät jeweils über eine eigene Basisgerät-Zählvorrichtung bzw. über eine Mobilgerät-Zählvorrichtung verfügen, und wobei die Zählvorrichtungen dazu eingerichtet sind, auf einen Startbefehl hin jeweils in einem stabilen, definierten Takt zu zählen zu beginnen, und wobei das Basisgerät dazu eingerichtet ist, jeder Adresse am Steuerbus einen Einschaltbefehl/Ausschaltbefehl zu übermitteln und anschließend den Adressen der Reihe nach einen Ausschaltbefehl/Einschaltbefehl zu übermitteln, und wobei das Basisgerät dazu eingerichtet ist, jeder Adresse Zählerstand der Basisgerät-Zählvorrichtung zum jeweiligen Ausschaltzeitpunkt/Einschaltzeitpunkt zuzuordnen, und wobei das Mobilgerät dazu eingerichtet ist, auf einen Auslösebefehl hin den zu dem Zeitpunkt des Auslösebefehls aktuellen Zählerstand der Mobilgerät-Zählvorrichtung zu speichern, und wobei das Mobilgerät und das Basisgerät dazu eingerichtet sind, bei einer Kommunikationsverbindung miteinander die in dem Mobilgerät gespeicherten Zählerstände mit den in dem Basisgerät abgespeicherten Zählerständen abzugleichen.

Mit dem erfindungsgemäßen Steuergerät wird das Auffinden der Zuordnung der Geräte an dem Steuerbus zu "ihrer" Adresse (bzw. umgekehrt) wesentlich vereinfacht. Das Basisgerät schaltet bei allen Adressen die Geräte ein (aus), bei Beleuchtungskomponenten leuchten diese dann. Anschließend werden die einzelnen Geräte der Reihe nach ab(ein)geschaltet, z.B. im Sekundentakt. Gleichzeitig speichert das Basisgerät den Zählerstand zum Zeitpunkt des Abschaltens der Adresse. Nachdem alle Komponenten abgeschaltet sind, beginnt der Vorgang wieder von vorne, bis der gesamte Prozess beendet wird.

Ein Benutzer bewegt sich mit dem Mobilgerät durch das Gebäude und übermittelt dem Mobilgerät einen Auslösebefehl, wenn bei einer Beleuchtungskomponente das Licht erlischt. Durch den Auslösebefehl wird im Mobilgerät zu diesem Auslösebefehl der aktuelle Zählerstand gespeichert und der Benutzer vermerkt in einem Geräteplan die Bezeichnung des Gerätes ("Leuchte vier", "Leuchte eins", etc ....), bei welchem gerade ein Auslösebefehl erteilt wurde.

Sind alle Räume des Gebäudes bzw. alle Komponenten an dem Steuerbus abgeschritten, so sollte zu jedem Gerät ein Auslösebefehl erfolgt sein.

Anschließend kann das Ein-/Ausschalten der Geräte durch das Basisgerät beendet werden und es kann eine Kommunikationsverbindung zwischen dem Basisgerät und dem Mobilgerät aktiviert werden. Außerdem werden die Zählvorrichtungen im Basis- und Mobilgerät gestoppt.

Durch Vergleich der Zählerstände im Mobilgerät zum Zeitpunkt des Auslösebefehls und zum Zeitpunkt der Auslöseaktion durch das Basisgerät können die Adressen der Reihenfolge der Tastendrücke zugeordnet werden und über den Geräteplan kann so jeder Adresse, an welche ein Gerät angeschlossen ist, das entsprechende Gerät zugeordnet werden.

Wichtig ist dabei, dass die beiden Zählvorrichtungen in einem stabilen und definierten Takt zählen. Unter "stabil" ist dabei lediglich zu verstehen, dass sich der Takt über die Zeitspanne der Messung nicht ändert (wobei aber typische Abweichungen z.B. in Folge einer Zählerdrift unproblematisch ist) und außerdem muss der Takt bekannt sein ("definiert" sein). Es ist aber nicht notwendig, dass die Takte der beiden Zählvorrichtungen identisch sind und die Zählvorrichtungen können auch bei unterschiedlichen Zählerständen zu zählen beginnen. Teure und absolut genaue Taktgeber sind allerdings nicht notwendig.

Grundsätzlich können das Basisgerät und das Mobilgerät auf beliebige Art und Weise miteinander kommunizieren. Besonders günstig ist es allerdings, wenn zur Kommunikation die beiden Geräte mittels einer Steckverbindung miteinander verbindbar sind.

Es sind dann an den beiden Geräten keine Eingaben durch einen Benutzer notwendig, um eine Kommunikation aufzubauen, sondern einfach durch das Zusammenstecken der beiden Geräte bauen diese automatisch eine Kommunikation auf zum Abgleich der Zählerstände und stoppen andererseits gleichzeitig die Zählervorrichtungen.

Weiters kann in vorteilhafter Weise bei dieser Variante der Erfindung der Startbefehl zum Starten der Basisgerät-Zählvorrichtung und der Mobilgerät-Zählvorrichtung durch Trennen der Steckverbindung der beiden Geräte gegeben werden. Separate Startbefehle sind hier dann durch einen Benutzer ebenfalls nicht notwendig.

Weiters ist es von Vorteil, wenn das Mobilgerät über ein Betätigungselement zur Eingabe des Auslösebefehls zur Speicherung des aktuellen Zählerstandes der Mobilgerät-Zählvorrichtung verfügt. Beispielsweise handelt es sich bei dem Betätigungselement um einen Knopf, welchen der Benutzer drückt und wodurch er einen Auslösebefehl zur Speicherung des Zählerstandes erzeugt.

Der Auslösebefehl könnte natürlich auch auf andere Art und Weise generiert werden, beispielsweise kann das Mobilgerät über einen Helligkeitssensor verfügen, welcher das Ausschalten der Beleuchtungskomponente detektiert und entsprechend den Auslösebefehl generiert. Auch andere technische Realisierungen sind möglich.

Diese haben allerdings gegenüber dem Betätigungselement den Nachteil, dass sie einerseits technisch aufwändiger zu realisieren sind und andererseits das Mobilgerät dadurch weniger universell einsetzbar wird, da dieses bei der beschriebenen Realisierung mit einem Helligkeitssensor nur in Zusammenhang mit Lichtquellen zum Einsatz kommen kann. Ein Mobilteil mit einem Betätigungselement zum Betätigen durch einen Benutzer ist hingegen universell einsetzbar, solange der Benutzer an einem Gerät feststellen kann, ob es ein- oder ausgeschaltet ist.

Im Folgenden ist die Erfindung an Hand der Zeichnung näher erläutert. In dieser zeigt
Fig. 1 einen Steuerbus mit daran angeschlossenen Geräten und einem erfindungsgemäßen Steuergerät,
Fig. 2 den Steuerbus aus Figur 1 mit dem Mobilgerät im Einsatz,
Fig. 3 eine beispielhafte Darstellung der Zählerstände in den beiden Komponenten des Steuergerätes, und
Fig. 4 eine Zuordnung der Geräte an dem Steuerbus zu unterschiedlichen Adressen an dem Bus in Übereinstimmung mit den Zählerständen aus Figur 3.

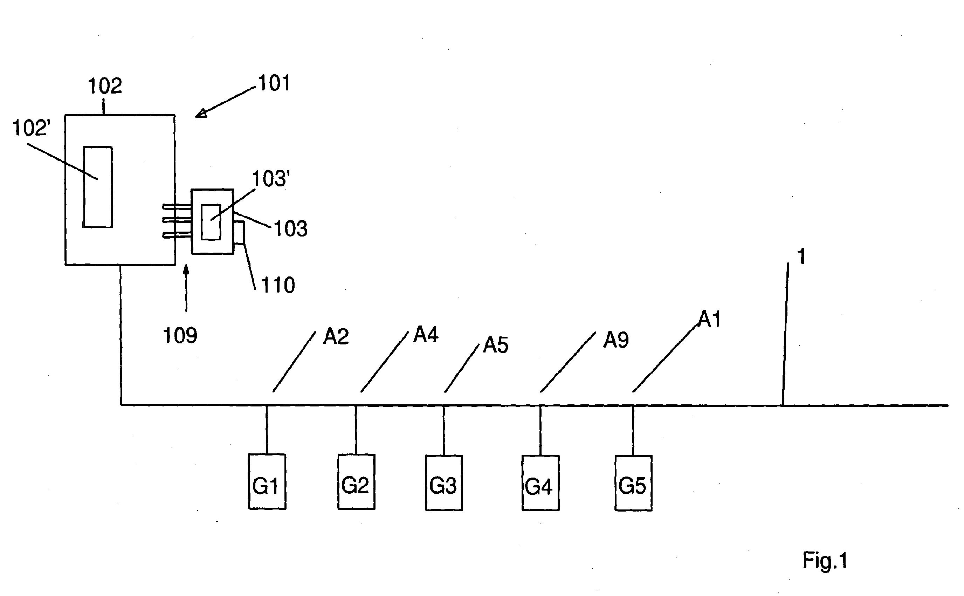

Die Figur 1 zeigt einen Steuerbus 1 mit an diesem Bus 1 angeschlossenen elektronischen Geräten G1, G2, G3, G4, G5. Jedem dieser Geräte G1 - G5 ist eine eindeutige Adresse (A1, A2, ..., A4, A5, ... A9, ...) zugeordnet, über welche jedes Gerät an dem Steuerbus 1 ansteuerbar ist. Nach der Installation des Busses und dem Anschließen der Geräte sind die den Geräten zugeordneten Adressen (bzw. deren Zuordnung) allerdings nicht bekannt und müssen identifiziert werden, damit die einzelnen Geräte an dem Bus korrekt angesprochen werden können und Bedienelemente wie Schalter, Taster etc. den Geräten über die Adressen korrekt zugeordnet werden können.

Mit einem erfindungsgemäßen Steuergerät 101 wird eine solche Zuordnung der Adressen zu an dem Steuerbus 1 angeschlossenen elektronischen Geräten G1, G2, G3, G4, G5 auf einfache Weise ermöglicht.

Das erfindungsgemäße Steuergerät 101 besteht aus einem Basisgerät 102, mittels welchem das Steuergerät 101 mit dem Steuerbus 1 verbunden ist, sowie aus einem Mobilgerät 103, welches mit dem Basisgerät 102 zur Kommunikation verbindbar ist. Dazu verfügen die beiden Geräte 102, 103 über eine Steckverbindung 109, und im zusammengesteckten Zustand wie gezeigt können die beiden Geräte 102,103 miteinander kommunizieren.

Sowohl das Basisgerät 102 als auch das Mobilgerät 103 verfügen jeweils über eine eigene Basisgerät-Zählvorrichtung 102' bzw. über eine Mobilgerät-Zählvorrichtung 103'. Auf einen Startbefehl hin sind die beiden Zählvorrichtungen 102', 103' dazu eingerichtet, in einem stabilen und definierten Takt zu zählen zu beginnen.

Günstig ist, wenn die Zählerstände von einem gemeinsamen Zählerwert wegzählen, es ist aber auch problemlos möglich, dass die Zähler von unterschiedlichen Zählerständen weg zählen, da dies einfach rückgerechnet werden kann. Stabil bedeutet, dass ein Zähler in gleichlang dauernden Zeitintervallen seinen Zählerstand jeweils um denselben Wert erhöht.

Das Basisgerät 102 ist weiters dazu eingerichtet, jeder Adresse A1, A2, ..., A4, A5, ... A9, ... an dem Steuerbus 1 einen Einschaltbefehl/ Ausschaltbefehl zu übermitteln und anschließend den Adressen der Reihe nach einen Ausschaltbefehl/Einschaltbefehl zu übermitteln. Handelt es sich bei den Geräten G1 - G5 um Beleuchtungsgeräte, so wird vorerst allen Adressen ein Einschaltbefehl übermittelt, entsprechend leuchten alle Beleuchtungsgeräte. Anschließend übermittelt das Basisgerät 102 jeder Adresse der Reihe nach einen Ausschaltbefehl, sodass die Beleuchtungsgeräte zu leuchten aufhören.

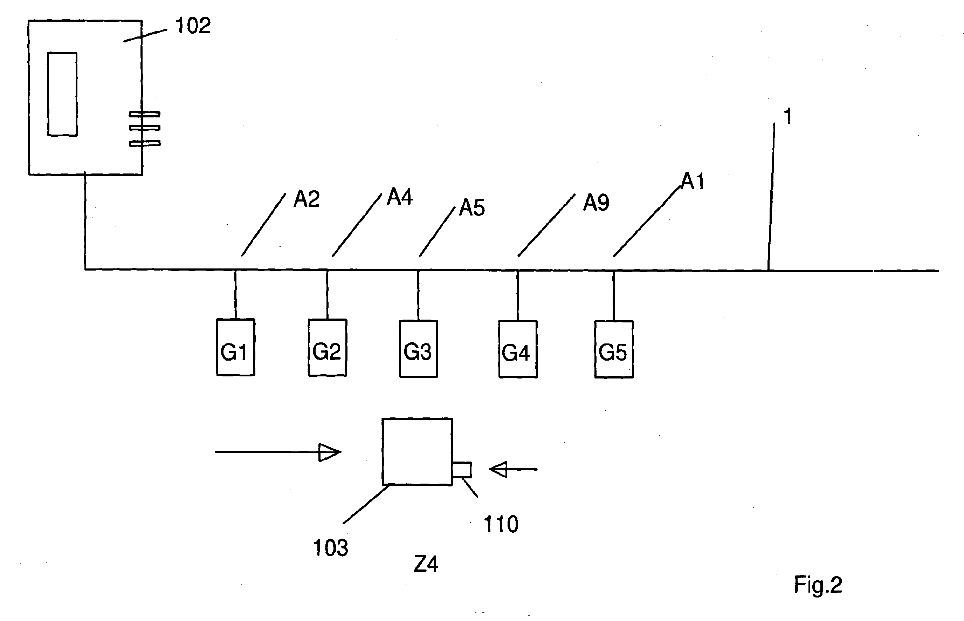

Ein Benutzer, der wie in Figur 2 dargestellt nun mit dem von dem Basisgerät 102 bereits getrennten Mobilgerät 103 die einzelnen Geräte abgeht und sich wie dargestellt etwa bei Gerät G2 befindet, erkennt das Abschalten des Gerätes G2.

Das Mobilgerät 103 ist nun erfindungsgemäß dazu eingerichtet, auf einen Auslösebefehl hin den zu dem Zeitpunkt des Auslösebefehls aktuellen Zählerstand der Mobilgerät-Zählvorrichtung 103' in einem nicht dargestellten Speicher zu speichern.

Dazu verfügt das Mobilgerät 103 über ein Betätigungselement 110 zur Eingabe des Auslösebefehls, welches der Benutzer im Zeitpunkt des Erlöschens z.B. des Beleuchtungsgerätes G2 betätigt. Durch den so generierten Auslösebefehl wird der aktuelle Zählerstand der Mobilgerät-Zählvorrichtung 103' gespeichert.

Der Benutzer vermerkt in einem Gebäudeplan die Bezeichnung des Gerätes, in diesem Fall des Gerätes G2, wobei lediglich darauf zu achten ist, dass die Bezeichnungen (Nummern) der Geräte der Reihe nach aufgezeichnet werden, so, wie sie der Reihenfolge der Auslösebefehle entsprechen. Am Ende der ganzen Prozedur sollten bei 5 Geräten an dem Bus in dem Mobilgerät genau 5 Zählerstände gespeichert sein und in dem Gebäudeplan die 5 Geräte (in Entsprechung zu der Reihenfolge der Auslösebefehle) der Reihe nach notiert sein.

Weiters ist das Basisgerät 102 dazu eingerichtet, jeder Adresse (A1, A2, ..., A4, A5, ... A9, ...) den Zählerstand der Basisgerät-Zählvorrichtung 102' zum jeweiligen Ausschaltzeitpunkt/Einschaltzeitpunkt zuzuordnen. Im konkreten Beispiel der Beleuchtungsgeräte wird jedes Mal, wenn einer Adresse ein Ausschaltbefehl übermittelt wird, der entsprechende Zählerstand gespeichert.

Nachdem alle Beleuchtungsgeräte abgeschaltet wurden, werden wieder alle Geräte eingeschaltet und der Abschaltprozess etc. beginnt von Vorne, solange, bis die Prozedur - von dem Benutzer - beendet wird, was dann der Fall ist, wenn der Benutzer alle Geräte abgeschritten und zu jedem Gerät einen Zählerstand abgespeichert hat.

Die Prozedur wird beendet, wenn das Mobilgerät 103 und das Basisgerät 102 wieder zusammengesteckt werden. Einerseits werden die Zählvorrichtungen gestoppt und andererseits wird eine Kommunikationsverbindung zwischen den beiden Geräten aufgebaut und die in dem Mobilgerät 103 gespeicherten Zählerstände werden mit jenen in dem Basisgerät 102 abgeglichen.

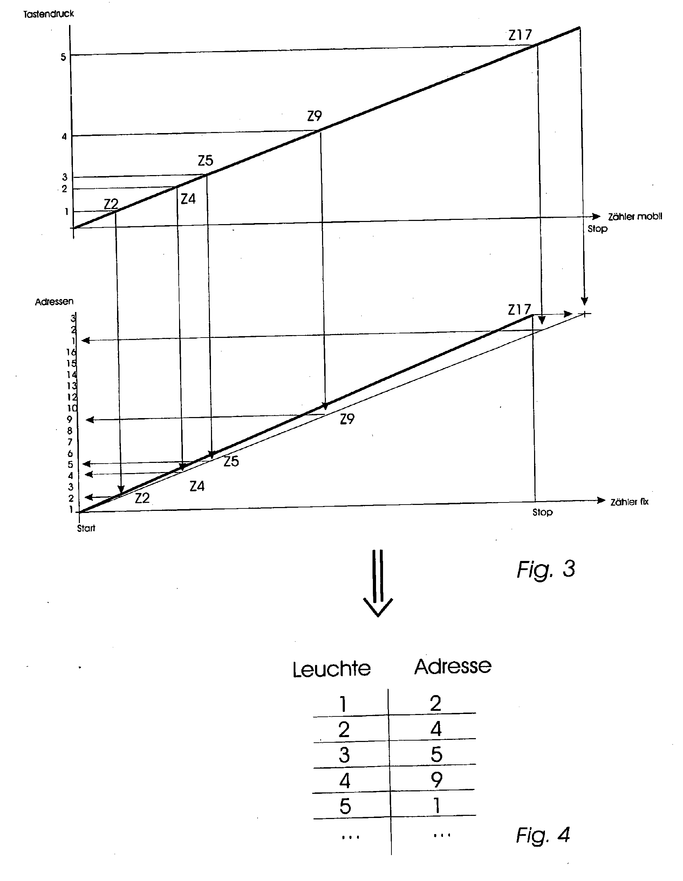

Figur 3 in Zusammenschau mit Figur 2 und Figur 4 erläutert nun, wie aus den gespeicherten Zählerständen eine Zuordnung der Adressen zu den Geräten erfolgt.

Wie aus Figur 2 zu erkennen, schreitet ein Benutzer - in diesem Beispiel - die Geräte der Reihe nach von links nach rechts ab; die Anordnung der Geräte G1, G2, G3, G4, G5 der Reihe nach von links nach rechts ist zufällig gewählt bzw. sind die Geräte der Einfachheit halber in dieser Reihenfolge nummeriert.

Figur 3 zeigt in der oberen Hälfte den sich von Null aus erhöhenden Zählerstand (fette Linie) des Mobilgerätes mit fortschreitender Zeit, die untere Hälfte zeigt den sich ebenfalls von Null aus erhöhenden Zählerstand (fette Linie) des Basisgerätes.

Der Startbefehl zum Starten der Basisgerät-Zählvorrichtung 102' und der Mobilgerät-Zählvorrichtung 103' erfolgt vorzugsweise durch Trennen der Steckverbindung der beiden Geräte 102', 103'.

Nach dem Trennen befindet sich der Benutzer bei Gerät G1, die Beleuchtung erlischt und der Benutzer drückt das Betätigungselement 110. Entsprechend wird ein Zählerstand Z2 (Figur 3) gespeichert. Bei Gerät G2 speichert das Drücken einen Zählerstand Z4, bei Gerät G3 den Zählerstand Z5, bei Gerät G4 den Zählerstand Z9 und bei Gerät G5 den Zählerstand Z17.

Der Benutzer hat nun alle Geräte abgeschritten und steckt das Mobilgerät in das Basisgerät ein. Ein Vergleich der Zählerstände ergibt nun folgendes: Das Basisgerät hat ausgehend von Zählerstand Z1 (= 0) begonnen, der Reihe nach, startend bei Adresse A1 (bis zur höchsten Adresse A16), die Adressen abzuschalten, d.h. Z1: "Abschalten Adresse A1", Z2: "Abschalten Adresse A2", ..... Z16: "Abschalten Adresse A16", Z17: "Abschalten Adresse A1" usw.

Ein Vergleich aus Figur 3 ergibt nun, dass die in dem Mobilgerät gespeicherten Zählerstände Z2, Z4, Z5, Z9, Z17 den Adressen A2, A4, A5, A9, A1 entsprechen. Über die Zuordnung G1 - Z2 - A2; G2 - Z4 - A4, .... ergibt sich somit die Zuordnungstabelle aus Figur 4, mit der korrekten Zuordnung der Adressen zu den jeweiligen Geräten.

Mit dem erfindungsgemäßen Steuergerät wird das Zuordnen der Geräte an dem Steuerbus zu "ihrer" Adresse wesentlich vereinfacht. Die Erfindung wurde hier an Hand von Beleuchtungsgeräten näher erörtert, bei welchen es sich anbietet, vorerst alle Geräte einzuschalten und das Ausschalten zu erkennen und dies entsprechend im Mobilgerät zu vermerken. Bei anderen Geräten könnte es aber auch genauso günstiger sein, diese vorerst alle auszuschalten bzw. ausgeschaltet zu lassen und diese dann der Reihe nach einzuschalten. Außerdem können natürlich auch "Mischformen" an dem Bus aus unterschiedlichen Geräten angeschlossen sein, von denen manchen dann zur Zuordnung der Adressen ausgeschalten, andere hingegen eingeschaltet werden.

Die Erfindung wurde in den Figuren an Hand einer bestimmten Anzahl von an den Steuerbus angeschlossenen Geräten erörtert. Für den Fachmann ist es allerdings klar, dass die Erfindung auch bei einer im Prinzip beliebigen Anzahl von an den Steuerbus angeschlossen Geräten zum Einsatz kommen kann.

## Patentansprüche

1. Steuergerät (101) zum Erkennen der Zuordnung von Adressen (A1. ... , A16) eines Steuerbusses (1) zu elektronischen Geräten (G1, G2, G3, G4, G5), welche an dem Steuerbus (1) angeschlossen sind, wobei jedem Gerät (G1, G2, G3, G4, G5) eine eindeutige Adresse (A1, A2, ..., A4, A5, ... A9, ...) zugeordnet ist, über welche Adresse das Gerät über den Steuerbus ansteuerbar ist, und wobei das Steuergerät (101) zur Ansteuerung der Geräte (G1, G2, G3, ....) an den Steuerbus (1) anschließbar ist,
**dadurch gekennzeichnet, dass**
das Steuergerät (101)
*) aus einem Basisgerät (102) zur Verbindung mit dem Steuerbus (1) besteht, sowie weiters aus
*) einem Mobilgerät (103),
und wobei das Basisgerät (102) und das Mobilgerät (103) zur Kommunikation miteinander eingerichtet sind,
und wobei das Basisgerät (102) und das Mobilgerät (103) jeweils über eine eigene Basisgerät-Zählvorrichtung (102') bzw. über eine Mobilgerät-Zählvorrichtung (103') verfügen,
und wobei die Zählvorrichtungen (102', 103') dazu eingerichtet sind, auf einen Startbefehl hin jeweils in einem stabilen, definierten Takt zu zählen zu beginnen,
und wobei das Basisgerät (102) dazu eingerichtet ist, jeder Adresse (A1, A2, ..., A4, A5, ... A9, ...) am Steuerbus (1) einen Einschaltbefehl/Ausschaltbefehl zu übermitteln und anschließend den Adressen der Reihe nach einen Ausschaltbefehl/Einschaltbefehl zu übermitteln,
und wobei das Basisgerät (102) dazu eingerichtet ist, jeder Adresse (A1, A2, ..., A4, A5, ... A9, ...) den Zählerstand der Basisgerät-Zählvorrichtung (102') zum jeweiligen Ausschaltzeitpunkt/ Einschaltzeitpunkt zuzuordnen,
und wobei das Mobilgerät (103) dazu eingerichtet ist, auf einen Auslösebefehl hin den zu dem Zeitpunkt des Auslösebefehls aktuellen Zählerstand der Mobilgerät-Zählvorrichtung (103') zu speichern,
und wobei das Mobilgerät (103) und das Basisgerät (102) dazu eingerichtet sind, bei einer Kommunikationsverbindung miteinander die in dem Mobilgerät (103) gespeicherten Zählerstände mit den in dem Basisgerät (102) abgespeicherten Zählerständen abzugleichen.

2. Steuergerät nach Anspruch 1, **dadurch gekennzeichnet, dass** das Basisgerät (102) und das Mobilgerät (103) zur Kommunikation mittels einer Steckverbindung (109) miteinander verbindbar sind.

3. Steuergerät nach Anspruch 2, **dadurch gekennzeichnet, dass** der Startbefehl zum Starten der Basisgerät-Zählvorrichtung (102') und der Mobilgerät-Zählvorrichtung (103') durch Trennen der Steckverbindung der beiden Geräte (102',103') gegeben wird.

4. Steuergerät nach einem der Ansprüche 1 bis 3, **dadurch gekennzeichnet, dass** das Mobilgerät (103) über ein Betätigungselement (110) zur Eingabe des Auslösebefehls zur Speicherung des aktuellen Zählerstandes der Mobilgerät-Zählvorrichtung (103') verfügt.

## Claims

1. A control device (101) for recognising the allocation of addresses (A1, ..., A16) of a control bus (1) to electronic devices (G1, G2, G3, G4, G5), which are connected to the control bus (1), wherein each device (G1, G2, G3, G4, G5) is allocated a unique address (A1, A2, ..., A4, A5, ... A9, ...), via which address the device can be controlled via the control bus, and wherein the control device (101) can be connected to the control bus (1) for controlling, said devices (G1, G2, G3, G4, G5) **characterised in that**
the control device (101)
*) consists of a base device (102) for connection to the control device (1) and also consists of
*) a mobile device (103),
and wherein the base device (102) and the mobile device (103) are designed to communicate with one another,
and wherein the base device (102) and the mobile device (103) each have a dedicated base device counting apparatus (102') and a mobile device counting apparatus (103') respectively,
and wherein the counting apparatuses (102', 103') are designed to start counting upon a start command, in each case in a stable, defined cycle,
and wherein the base device (102) is designed to transmit a switch-on command/switch-off command to each address (A1, A2, ..., A4, A5, ... A9, ...) at the control bus (1) and then to transmit the addresses in the series in accordance with a switch-off command/switch-on command, and wherein the base device (102) is designed to allocate to each address (A1, A2, ..., A4, A5, ... A9, ...) the counter reading of the base device counting apparatus (102') at the respective switch-off point/switch-on point, and wherein the mobile device (103) is designed, upon a trigger command, to store the actual counter reading of the mobile device counting apparatus (103') at the moment of the trigger command,
and wherein the mobile device (103) and the base device (102) are designed, with a communication connection to one another, to match the counter readings stored in the mobile device (103) with the counter readings stored in the base device (102).

2. The control device according to Claim 1, **characterised in that** the base device (102) and the mobile device (103) can be interconnected by means of a plug connection (109) for communication.

3. The control device according to Claim 2, **characterised in that** the start command to start the base device counting apparatus (102') and the mobile device counting apparatus (103') is given by separating the plug connection of the two devices (102', 103').

4. The control device according to one of Claims 1 to 3, **characterised in that** the mobile device (103) has an actuation element (110) for inputting the trigger command to store the actual counter reading of the mobile device counting apparatus (103').

## Revendications

1. Appareil de commande (101) destiné à la reconnaissance de l'attribution d'adresses (A1, ... , A16) d'un bus de commande (1) à des appareils électroniques (G1, G2, G3, G4, G5) raccordés au bus de commande (1), une adresse unique (A1, A2, ..., A4, A5, ... A9, ...) étant attribuée à chaque appareil (G1, G2, G3, G4, G5), adresse via laquelle l'appareil peut être commandé par l'intermédiaire du bus de commande, et l'appareil de commande (101) pouvant être raccordé au bus de commande (1) en vue de commander les appareils (G1, G2, G3, ....),
**caractérisé en ce que**
l'appareil de commande (101)
*) se compose d'un appareil de base (102) en vue de la liaison avec le bus de commande (1), ainsi que, en plus,
*) d'un appareil mobile (103),
l'appareil de base (102) et l'appareil mobile (103) étant agencés pour communiquer entre eux,
et l'appareil de base (102) et l'appareil mobile (103) comportant respectivement un dispositif de comptage (102') pour appareil de base propre ou un dispositif de comptage (103') pour appareil mobile,
et les dispositifs de comptage (102', 103') étant agencés pour, à la suite d'une instruction de début, commencer respectivement à compter à un rythme stable défini,
et l'appareil de base (102) étant agencé pour transmettre à chaque adresse (A1, A2, ..., A4, A5, ... A9, ...) sur le bus de commande (1) une instruction d'activation/instruction de désactivation, puis pour transmettre aux adresses, une par une, une instruction de désactivation/instruction d'activation,
et l'appareil de base (102) étant agencé pour attribuer à chaque adresse (A1, A2, ..., A4, A5, ... A9, ...) le relevé de compteur du dispositif de comptage (102') pour appareil de base au moment de désactivation/moment d'activation respectif,
et l'appareil mobile (103) étant agencé pour, à la suite d'une instruction de déclenchement, enregistrer le relevé de compteur du dispositif de comptage (103') pour appareil mobile effectif au moment de l'instruction de déclenchement,
et l'appareil mobile (103) et l'appareil de base (102) étant agencés, en cas de liaison de communication l'un avec l'autre, afin d'aligner les relevés de compteur enregistrés dans l'appareil mobile (103) avec les relevés de compteur mémorisés dans l'appareil de base (102).

2. Appareil de commande selon la revendication 1, **caractérisé en ce que** l'appareil de base (102) et l'appareil mobile (103) peuvent être reliés l'un à l'autre en vue d'une communication à l'aide d'une fiche de connexion (109).

3. Appareil de commande selon la revendication 2, **caractérisé en ce que** l'instruction de démarrage pour lancer le dispositif de comptage (102') pour appareil de base et le dispositif de comptage (103') pour appareil mobile est donnée par déconnexion de la fiche de connexion des deux appareils (102', 103').

4. Appareil de commande selon l'une des revendications 1 à 3, **caractérisé en ce que** l'appareil mobile (103) comporte un actionneur (110) pour entrer l'instruction de déclenchement en vue d'enregistrer le relevé de compteur effectif du dispositif de comptage (103') pour appareil mobile.
